(19) Europäisches Patentamt

European Patent Office

Office européen des brevets

(11) **EP 1 141 798 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **00904831.5**

(22) Anmeldetag: **04.01.2000**

(51) Int Cl.⁷: $G05B\ 19/416$

(86) Internationale Anmeldenummer:
**PCT/DE00/00034**

(87) Internationale Veröffentlichungsnummer:
**WO 00/042479 (20.07.2000 Gazette 2000/29)**

(54) **STEUERUNGSVERFAHREN SOWIE NUMERISCHE STEUERUNG ZUR SCHWINGUNGSARMEN BESCHLEUNIGUNGSFÜHRUNG EINES BEWEGBAREN MASCHINENELEMENTES**

CONTROL METHOD AND NUMERICAL CONTROL FOR THE VIBRATION-REDUCED ACCELERATION OF A MOVABLE MACHINE PART

PROCEDE DE COMMANDE AINSI QUE COMMANDE NUMERIQUE POUR LA GESTION D'ACCELERATION AVEC PEU DE VIBRATIONS D'UN ELEMENT DE MACHINE MOBILE

(84) Benannte Vertragsstaaten:
**DE FR GB**

(30) Priorität: **14.01.1999 DE 19901192**

(43) Veröffentlichungstag der Anmeldung:
**10.10.2001 Patentblatt 2001/41**

(73) Patentinhaber: **SIEMENS AKTIENGESELLSCHAFT**
**80333 München (DE)**

(72) Erfinder:
• **FORSTER, Gerhard**
**D-90592 Schwarzenbruck (DE)**
• **HILLER, Jürgen**
**D-91301 Forchheim (DE)**
• **KREUSSER, Peter**
**D-73773 Aichwald (DE)**

(56) Entgegenhaltungen:
**EP-A- 0 685 779**       **WO-A- 94/19732**
**US-A- 4 603 286**       **US-A- 5 331 264**

• **"ALTIVAR 16 AC Drive Catalog", PAGE(S) A,1-32 XP002107507 Seite 1 Seite 2 Seite 28**

EP 1 141 798 B1

**Beschreibung**

Die Erfindung bezieht sich auf ein Steuerungsverfahren sowie eine numerische Steuerung zur schwingungsarmen Beschleunigungsführung des bewegbaren Maschinenelementes einer numerisch gesteuerten industriellen Bearbeitungsmaschine wie einer Werkzeugmaschine, einem Roboter oder dergleichen, wobei eine Bewegungsbahn des Maschinenelementes in unmittelbar aufeinanderfolgende interpolierbare Bewegungsabschnitte aufgelöst ist. Außerdem bezieht sich die Erfindung auf eine numerische Steuerung zur Durchführung des genannten Steuerungsverfahrens.

Bei einer Bewegungssteuerung von bewegbaren Maschinenelementen industrieller Bearbeitungsmaschinen wird beim Beschleunigen aufgrund des Beschleunigungsrucks die Maschinenstruktur zum Schwingen angeregt. Aus Gründen des Schonens der Mechanik der Bearbeitungsmaschine, z.B. einer numerisch gesteuerten Werkzeugmaschine oder einem Roboter, und zum Erreichen einer verbesserten Oberflächengüte, z.B. eines zu fertigenden Werkstückes, ist man stets bestrebt, solche Schwingungen zu vermeiden.

Bekannte Verfahren zur Reduzierung dieser Schwingungsneigung setzen eine Ruckbegrenzung ein. Eine solche Ruckbegrenzung kann beispielsweise in einem trapezförmigen Beschleunigungsverlauf bestehen.

Aus der internationalen Patentanmeldung WO 96/12992 mit dem Titel "Ruckbegrenzte Geschwindigkeitsführung" ist ein Steuerungsverfahren bekannt, bei dem Steuerungsdaten satzübergreifend gelesen und vorgegebene Sollgeschwindigkeiten als möglichst beizubehaltende Geschwindigkeitsobergrenzen sowie lokale Geschwindigkeitsbegrenzungen in Form von Zielgeschwindigkeiten zu definierten Zielpunkten im Rahmen eines "look a head" vorausschauend mit geringen Beschleunigungsänderungen im Rahmen des zulässigen maximalen Ruckes angefahren werden.

Bekannt ist außerdem der Einsatz eines Ruckfilters, welches immer aktiv in den Beschleunigungsvorgang eingreift. Dabei ist jedoch nachteilig, daß ein solches Ruckfilter auch in Phasen aktiv ist, in denen es eigentlich nicht benötigt wird. Außerdem wird mit einem Ruckfilter nur die Amplitude einer Schwingungs-Anregung reduziert, nicht aber die Frequenz komplett ausgefiltert. Dies führt zu drastischen Zeiteinbußen beim Positionieren.

Das Dokument US 5 331 264 zeigt ebenfalls einen einschlägigen Stand der Technik.

Aufgabe der vorliegenden Erfindung ist es daher, eine Beschleunigungsführung der eingangs genannten Art so weiterzubilden, daß die Anregung einer Maschinenschwingung vermieden werden kann, ohne daß es in unkritischen Beschleunigungsphasen zu Zeiteinbußen kommt.

Gemäß der vorliegenden Erfindung, wie sie inden Ansprüchen 1 und 5 dargelegt ist, wird diese Aufgabe durch ein Steuerungsverfahren zur schwingungsarmen Beschleunigungsführung eines bewegbaren Maschinenelementes einer numerisch gesteuerten industriellen Bearbeitungsmaschine wie einer Werkzeugmaschine, einem Roboter oder dergleichen gelöst, wobei eine Bewegungsbahn des Maschinenelementes in unmittelbar aufeinanderfolgende interpolierbare Bewegungsabschnitte aufgelöst ist, welches dadurch weitergebildet wird, daß bei der Interpolation resultierende Beschleunigungsprofile, die in einem Bereich nahe einer kritischen Eigenfrequenz des Maschinenelementes oder der Maschine liegen, mit einer reduzierten Beschleunigung ausgeführt werden.

Durch eine Beschleunigungsführung gemäß der vorliegenden Erfindung vermeidet man so erfolgreich die Anregung einer Maschinenschwingung. Das Prinzip besteht darin, daß der Interpolator die kritische Eigenfrequenz berücksichtigt und bei Beschleunigungsprofilen, die in der Nähe der Eigenfrequenz liegen, diese mit einer reduzierten Beschleunigung ausführt. Grundlage ist die Erkenntnis, daß ein Überschwingen eines Maschinenelementes, z.B. einer Maschinenachse, beim Positionieren nicht bei einem Positioniervorgang aus Eilgangsgeschwindigkeit am größten ist, sondern beim Positionieren aus sehr viel langsameren Geschwindigkeiten.

Die erfindungsgemäße Aufgabe wird außerdem durch eine numerische Steuerung zur schwingungsarmen Beschleunigungsführung der bewegbaren Maschinenelemente einer numerisch gesteuerten industriellen Bearbeitungsmaschine wie eine Werkzeugmaschine, einem Roboter oder dergleichen gelöst, wobei ein Interpolator zur Interpoloation einer in unmittelbar aufeinanderfolgende interpolierbare Bewegungsabschnitte aufgelösten Bewegungsbahn des Maschinenelementes vorgesehen ist, welche dadurch weitergebildet wird, daß der Interpolator so ausgestaltet ist, daß dieser bei der Interpolation resultierende Beschleunigungsprofile, die in einem Bereich nahe einer kritischen Eigenfrequenz des Maschinenelementes oder der Maschine liegen, mit einer reduzierten Beschleunigung ausführt.

Besonders vorteilhaft wird als kritische Eigenfrequenz die niedigste Eigenfreuqnez des Maschinenelementes oder der Maschine angenommen. Besonders günstig ist es, wenn die niedrigste Eigenfrequenz einer Maschinenachse oder des Maschinengrundbettes gewählt wird.

Eine besonders gute Ergänzung von Schwingungen erreicht man bei einer Reduzierung der Beschleunigung auf mindestens 90% der maximal möglichen Beschleunigung oder der Sollbeschleunigung.

Weitere Vorteile und Einzelheiten der Erfindung ergeben sich anhand der vorliegenden Beschreibung eines vorteilhaften Ausführungsbeispieles und in Verbindung mit den Figuren. Es zeigen:

FIG 1    Zeitdiagramm eines Positioniervorganges aus einem Eilgang und

FIG 2     Zeitdiagramm eines Positioniervorganges aus einer langsameren Geschwindigkeit.

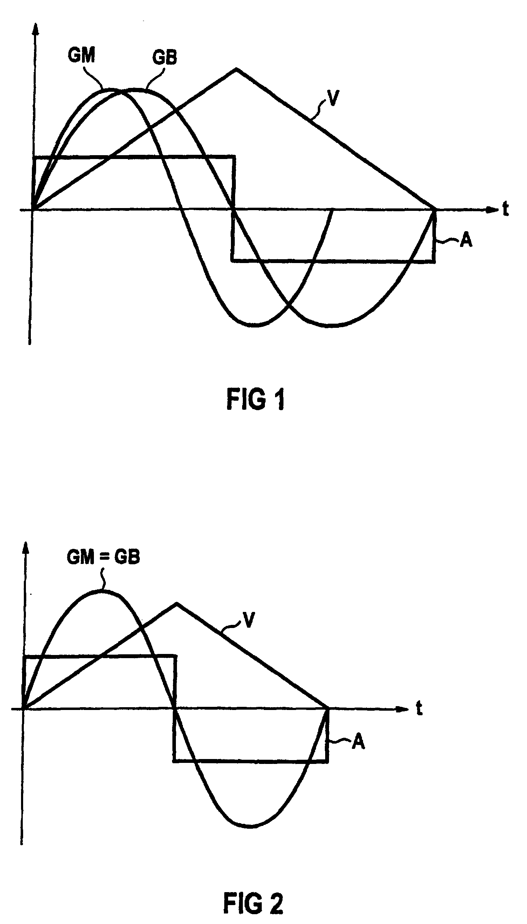

In der Darstellung gemäß FIG 1 ist ein Zeitdiagramm eines Positioniervorganges aus einem Eilgang gezeigt. Dabei sind die Geschwindigkeit V, die daraus resultierende Beschleunigung A sowie ein damit verbundenes Beschleunigungsprofil GB und die Grundschwingung GM über die Zeit t aufgetragen.

Gezeigt ist ein dreieckförmiger Geschwindigkeitsverlauf V, in dem mit einer konstanten Beschleunigung auf die maximal mögliche Geschwindigkeit verfahren wird, um anschließend mit einer konstanten negativen Beschleunigung und einer daraus resultierenden Geschwindigkeit den Zielzustand mit einer Geschwindigkeit Null zeitgenau zu erreichen. Bekanntermaßen stellt sich die Beschleunigung als die erste Ableitung aus der Geschwindigkeit V dar. Dementsprechend erklärt sich der gezeigte Beschleunigungsverlauf A.

Der ebenfalls über die Zeit t aufgetragene sinusförmige Verlauf der Grundschwingung der Maschine GM stellt die kritische Eigenfrequenz des Maschinenelementes oder der Maschine dar. Der ebenfalls sinusförmige Verlauf der Grundschwingung des Beschleunigungsprofiles GB ist an den konkret gezeigten Positioniervorgang angeschlossen. Das Beschleunigungsprofil stellt ebenfalls eine volle Sinusperiode dar und erreicht im gleichen Zeitpunkt wie die Geschwindigkeit V und Beschleunigung A Null.

Die Erfindung bassiert auf der Erkenntnis, das ein Überschwingen beispielsweise einer Maschinenachse beim Positionieren nicht bei einem Positioniervorgang aus Eilganggeschwindigkeit am größten ist, sondern beim Positionieren aus sehr viel langsameren Geschwindigkeiten. Dies wird daran deutlich, daß die Grundschwingung des Beschleunigungsprofils GB und die Eigenfrequenz der Maschinenmechanik (Grundschwingung der Maschine GM) unterschiedlich sind. Ein Maschinenelement, z.B. die genannte Maschinenachse, positioniert überschwingfrei, da die kritische mechanische Eigenfrequenz nicht angeregt wird.

Anders stellt sich die Situation in dem in FIG 2 dargestellten Zeitdiagramm dar. Es sind in der Darstellung nach FIG 2 ebenfalls die Geschwindigkeit V und die daraus resultierende Beschleunigung A über die Zeit t aufgetragen. Jedoch liegt nunmehr der ungünstige Fall für die Maschinenmechanik vor, daß die Grundschwingung der Maschine (Eigenfrequenz der Maschinenmechanik) GM die Grundschwingung des Beschleunigungsprofils GB überlagert. GM und GB sind deckungsgleich. Bei dieser in der Darstellung nach FIG 2 gezeigten Beschleunigungs-/Geschwindigkeits-Kombination besitzt der Beschleunigungsvorgang somit die gleiche Grundschwingung wie die Maschinenmechanik. In diesem Fall ist die Schwingungsanregung am größten.

Dieser Effekt kann durch eine Fourierreihenentwicklung einer Rechteckkurve folgendermaßen verdeutlicht werden:

$$\text{Acc}(t)=4*a_{max}/pi*(\sin(w*t)+1/3*\sin(3*w*t)+1/5*\sin(5*w*t)+...)$$

$$\text{mit } w=2*pi*f$$

Dabei beschreibt w die Kreisfrequenz, f die Frequenz, t die Zeit und $a_{max}$ die maximal mögliche Beschleunigung. pi steht entsprechend für das mathematische $\pi$.

Gemäß der vorliegenden Erfindung erfolgt bei einer Beschleunigungsführung eines bewegbaren Maschinenelementes eine Interpolation so, daß eine kritische Eigenfrequenz des Maschinenelementes und auch der gesamten Maschine berücksichtigt wird und bei solchen Beschleunigungsprofilen, bei denen die Grundschwingung des Beschleunigungsprofils GB in der Nähe der Eigenfrequenz (Grundschwingung der Maschine GM) liegt, diese mit einer reduzierten Beschleunigung ausgeführt wird. Dies hat den Vorteil, daß in unkritischen Bereichen des Beschleunigungsprofils keine Eingriffe und damit verbunden keine unnötigen Zeiteinbußen erforderlich sind.

Die kritischste Frequenz der Maschinenmechanik ist die niedrigste Eigenfrequenz des Maschinenelementes oder der gesamten Maschine. Daher erfolgt vorteilhafterweise eine Überprüfung, ob das Beschleunigungsprofil in der Nähe der niedrigsten Eigenfrequenz liegt, um dann dieses Beschleunigungsprofil mit einer reduzierten Beschleunigung auszuführen. Besonders vorteilhaft ist eine Reduzierung der Beschleunigung auf mindestens 90% der maximal möglichen Beschleunigung oder der Sollbeschleunigung.

Besonders kritisch ist in der Praxis die niedrigste Eigenfrequenz einer Maschinenachse oder des Maschinengrundbettes. Deshalb wird besonders vorteilhaft diese niedrigste Eigenfrequenz der Maschinenachse und des Maschinengrundbettes zugrundegelegt.

Im folgenden soll die Erfindung anhand eines konkreten Ausführungsbeispieles dargestellt werden.

Das Ausführungsbeispiel bassiert auf den folgenden Annahmen:

Kritische Eigenfrequenz:

$$F_{kritisch}=20Hz \qquad => \qquad T_{kritisch}=50ms$$

Sollbeschleunigung:

$$a_{soll} = 10m/s^2$$

Kritische Geschwindigkeit:

$$V_{kritisch}=a_{soll}*T_{kritisch}/2=10m/s^2*50ms/2=0.25m/s=15m/min$$

Bei einer Beschleunigung auf diese kritische Geschwindigkeit $V_{kritisch}$ wird die Beschleunigung erfindungsgemäß reduziert.

Die Reduzierung kann auf 90% der maximal möglichen Beschleunigung oder 90% der Sollbeschleunigung $a_{soll}$ erfolgen. Die daraus resultierende Grundschwingung GB des Beschleunigungsprofils beträgt dann entsprechend

$$f_{beschleunigung}=0.9*a_{soll}*1/v_{soll}/2=0.9*10m/s^2*1/0.25m/s/2=18Hz.$$

**Patentansprüche**

1. Steuerungsverfahren zur ruckbegrenzten Beschleunigungsführung eines bewegbaren Maschinenelementes einer numerisch gesteuerten industriellen Bearbeitungsmaschine wie einer Werkzeugmaschine, eines Roboters oder dergleichen, wobei eine Bewegungsbahn des Maschinenelementes in unmittelbar aufeinanderfolgende interpolierbare Bewegungsabschnitte aufgelöst ist, **dadurch gekennzeichnet, daß** wenn die Grundschwingungen (GB) der aus der Interpolation resultierenden Beschleunigungsprofile in einem Bereich nahe einer kritischen Eigenfrequenz (GM) des Maschinenelements oder der Machine liegen, die entsprechenden Bewegungsabschnitte mit einer reduzierten Beschleunigung ausgeführt werden.

2. Steuerungsverfahren nach Anspruch 1, **dadurch gekennzeichnet, daß** als kritische Eigenfrequenz die niedrigste Eigenfrequenz des Maschinenelementes oder der Maschine angenommen wird.

3. Steuerungsverfahren nach Anspruch 1 oder 2, **dadurch gekennzeichnet, daß** eine Reduzierung der Beschleunigung auf mindestens 90% der maximal möglichen Beschleunigung oder der Sollbeschleunigung erfolgt.

4. Steuerungsverfahren nach Anspruch 2 oder 3, **dadurch gekennzeichnet, daß** als kritische Eigenfrequenz die niedrigste Eigenfrequenz einer Maschinenachse oder des Maschinengrundbetts gewählt wird.

5. Numerische Steuerung zur ruckbegrenzten Beschleunigungsführung eines bewegbaren Maschinenelementes einer numerisch gesteuerten industriellen Bearbeitungsmaschine wie einer Werkzeugmaschine, eines Roboters oder dergleichen, wobei ein Interpolator zur Interpolation einer in unmittelbar aufeinanderfolgende interpolierbare Bewegungsabschnitte aufgelösten Bewegungsbahn des Maschinenelementes vorgesehen ist, **dadurch gekennzeichnet, daß** der Interpolator so ausgestaltet ist, daß wenn die Grundschwingungen (GB) der aus der Interpolation resultierenden Beschleunigungsprofile in einem Bereich nahe einer kritischen Eigenfrequenz (GM) des Maschinenelements oder der Machine liegen, die entsprechenden Bewegungsabschnitte mit einer reduzierten Beschleunigung ausgeführt werden.

6. Numerische Steuerung nach Anspruch 5, **dadurch gekennzeichnet, daß** dem Interpolator als kritische Eigenfrequenz die niedrigste Eigenfrequenz des Maschinenelementes oder der Maschine dient.

7. Numerische Steuerung nach Anspruch 6, **dadurch gekennzeichnet, daß** dem Interpolator als kritische Eigenfrequenz die niedrigste Eigenfrequenz einer Maschinenachse oder des Maschinengrundbetts dient.

8. Numerische Steuerung nach Anspruch 5 oder 6 oder 7, **dadurch gekennzeichnet, daß** der Interpolator so ausgestaltet ist, daß eine Reduzierung der Beschleunigung auf mindestens 90% der maximal möglichen Beschleunigung oder der Sollbeschleunigung erfolgt.

**Revendications**

1.  Procédé de commande pour la gestion d'accélération avec limitation d'à-coup d'un élément de machine mobile d'une machine d'usinage industrielle à commande numérique, par exemple d'une machine-outil, d'un robot ou autres, une trajectoire de l'élément de machine étant décomposée en tronçons de mouvement immédiatement consécutifs et pouvant être interpolés, **caractérisé par le fait que**, lorsque les oscillations fondamentales (GB) des profils d'accélération résultant de l'interpolation se trouvent dans une zone proche d'une fréquence propre critique (GM) de l'élément de machine ou de la machine, les tronçons de mouvement correspondants sont réalisés avec une accélération réduite.

2.  Procédé de commande selon la revendication 1, **caractérisé par le fait qu'**on prend comme fréquence propre critique la plus petite fréquence propre de l'élément de machine ou de la machine.

3.  Procédé de commande selon la revendication 1 ou 2, **caractérisé par le fait qu'**on effectue une réduction de l'accélération à au moins 90 % de l'accélération maximale possible ou de l'accélération de consigne.

4.  Procédé de commande selon la revendication 2 ou 3, **caractérisé par le fait qu'**on choisit comme fréquence propre critique la plus petite fréquence propre d'un axe de machine ou du bâti de base de machine.

5.  Commande numérique pour la gestion d'accélération avec limitation d'à-coup d'un élément de machine mobile d'une machine d'usinage industrielle à commande numérique, par exemple d'une machine-outil, d'un robot ou autres, un interpolateur étant prévu pour l'interpolation d'une trajectoire, décomposée en tronçons de mouvement immédiatement consécutifs et pouvant être interpolés, de l'élément de machine, **caractérisée par le fait que** l'interpolateur est conçu de telle sorte que, lorsque les oscillations fondamentales (GB) des profils d'accélération résultant de l'interpolation se trouvent dans une zone proche d'une fréquence propre critique (GM) de l'élément de machine ou de la machine, les tronçons de mouvement correspondants sont réalisés avec une accélération réduite.

6.  Commande numérique selon la revendication 5, **caractérisée par le fait que** la plus petite fréquence propre de l'élément de machine ou de la machine sert à l'interpolateur comme fréquence propre critique.

7.  Commande numérique selon la revendication 6, **caractérisée par le fait que** la plus petite fréquence propre d'un axe de machine ou du bâti de base de machine sert à l'interpolateur comme fréquence propre critique.

8.  Commande numérique selon la revendication 5 ou 6 ou 7, **caractérisée par le fait que** l'interpolateur est conçu de telle sorte qu'il s'effectue une réduction de l'accélération à au moins 90 % de l'accélération maximale possible ou de l'accélération de consigne.

**Claims**

1.  Control method for the jolt-limited acceleration of a movable machine element of a numerically controlled industrial processing machine such as a machine tool, a robot or the like, a path of movement of the machine element being broken down into directly successive interpolatable movement sections, **characterised in that** if the fundamental vibrations (GB) of the acceleration profiles resulting from the interpolation lie in a range close to a critical natural frequency (GM) of the machine element or of the machine, the corresponding movement sections are carried out with a reduced acceleration.

2.  Control method according to Claim 1, **characterised in that** the lowest natural frequency of the machine element or of the machine is taken as the critical natural frequency.

3.  The control method according to Claim 1 or 2, **characterised in that** a reduction of the acceleration to at least 90% of the maximum possible acceleration or of the nominal acceleration takes place.

4.  Control method according to Claim 2 or 3, **characterised in that** the lowest natural frequency of a machine axis or of the machine foundation bed is chosen as the critical natural frequency.

5. Numerical control for the jolt-limited acceleration of a movable machine element of a numerically controlled industrial processing machine such as a machine tool, a robot or the like, in which an interpolator is provided for the interpolation of a path of movement of the machine element broken down into directly successive interpolatable movement sections, **characterised in that** the interpolator is designed such that if the fundamental vibrations (GB) of the acceleration profiles resulting from the interpolation lie in a range close to a critical natural frequency (GM) of the machine element or of the machine, the corresponding movement sections are carried out with a reduced acceleration.

6. Numerical control according to Claim 5, **characterised in that** the lowest natural frequency of the machine element or of the machine serves the interpolator as the critical natural frequency.

7. Numerical control according to Claim 6, **characterised in that** the lowest natural frequency of a machine axis or of the machine foundation bed serves the interpolator as the critical natural frequency.

8. Numerical control according to Claim 5 or 6 or 7, **characterised in that** the interpolator is designed such that a reduction of the acceleration to at least 90% of the maximum possible acceleration or of the nominal acceleration takes place.

**FIG 1**

**FIG 2**